(19) Europäisches Patentamt
European Patent Office
Office européen des brevets

(11) **EP 4 183 674 B1**

(12) **EUROPEAN PATENT SPECIFICATION**

(45) Date of publication and mention
of the grant of the patent:
**10.09.2025 Bulletin 2025/37**

(21) Application number: **21209480.9**

(22) Date of filing: **22.11.2021**

(51) International Patent Classification (IPC):
**B63H 21/17** (2006.01)   **B60L 50/10** (2019.01)
**H02J 3/38** (2006.01)   **B60L 50/13** (2019.01)
**B63H 23/24** (2006.01)

(52) Cooperative Patent Classification (CPC):
**B63H 21/17; B60L 50/15; B60L 50/40; B60L 50/61;**
**B63H 23/24; H02J 5/00;** B60L 2200/32;
B60L 2270/142; B60L 2270/145; B63H 2023/245;
H02J 2310/42

(54) **MARINE PROPULSION SYSTEM**

SEEFAHRTANTRIEBSSYSTEM

SYSTÈME DE PROPULSION MARINE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**24.05.2023 Bulletin 2023/21**

(73) Proprietor: **W-FIN S.à R.L.**
**1610 Luxembourg (LU)**

(72) Inventor: **CARDINI, Luciano**
**PERGOLA (PU) (IT)**

(74) Representative: **Puggioli, Tommaso**
**Bugnion S.p.A.**
**Via di Corticella, 87**
**40128 Bologna (IT)**

(56) References cited:
**EP-A1- 3 736 168**   WO-A1-2012/119873
**US-A1- 2016 362 187**

**Description**

This invention relates to a marine propulsion system and, in particular, a hybrid marine propulsion system.

Prior art propulsion systems adopted in the field of marine engineering can be broadly divided into traditional (Diesel) mechanical drives, electrical drives and hybrid drives that combine in different ways the opportunities offered by the different propulsion technologies, namely: Diesel, electrical, hydrogen and others.

In brief, electrical drive, compared to Diesel drive, allows improving ship layout, reduces noise and vibrations, enhances manoeuvrability and operational flexibility, improves efficiency (in some cases) and lowers maintenance costs, and allows providing alternative or combined power systems through the use of accumulators (such as batteries or the like).

By contrast, electrical drive systems are more expensive, mainly because the same propulsive power is subjected to a larger number of conversions. Electrical propulsion is therefore recommended for waterborne vessels which can make the most of the advantages of electrical drive during the course of their working life, thus obtaining better returns on the higher initial investment.

In particular, it is widely used for passenger ships and ferries, above all on account of the better layout and lower maintenance costs, ice breakers and tug-boats, above all on account of the greater manoeuvrability and operational flexibility, and luxury yachts, which can make the most all the advantages listed above.

Propulsion systems are known from documents WO 2012/119873 A1, EP 3 736 168 A1 or US 2016/362187 A1.

Hybrid propulsion systems include what are known as *parallel hybrid* and *serial hybrid* systems.

A system in which mechanical drive by an internal combustion engine is combined with an electric machine by a component known as a "coupler" is defined as *parallel hybrid.*

The parallel hybrid propulsion system is used mainly in pleasure craft, from cruisers to mega and giga yachts, since minor technical adjustments when choosing the propulsive configuration for the craft are sufficient to combine the advantages of mechanical drive with those of electrical drive, which can serve both as a booster (to reach top speed) and as a steady-state propulsion system (for cruising at sustained speeds), completely noiselessly if associated with an energy accumulation system.

Generally speaking, the electrical drive motors of parallel systems are relatively low-power motors because driving at sustained speeds is necessary only in certain situations such as, for example, leaving/entering a port, cruising in protected areas, on-board battery charging.

Parallel hybrid systems do not allow cruising at high speeds on electric drive only, since battery banks rated for the situations mentioned above would be subjected to excessive stress, lowering the state of health (SOH) of the batteries and thus reducing their working life.

One alternative might be to increase the size of the battery bank but that would mean increasing the weight of the craft and raising the construction costs (more batteries to buy).

Parallel hybrid systems necessarily involve using Diesel power generators to produce the energy for the auxiliary systems.

The machine room must inevitably be located at the stern of the ship so that the Diesel machines can be connected to the propulsion system but that means precluding significant changes to ship layout.

In parallel hybrid systems, it is difficult to reduce vibrations because it is impossible to install an effective vibration damping system, since the engine and the propulsion shaft need to be perfectly aligned.

The noise level is high also because the need to leave a passage for the transmission shaft means that the Diesel propulsion engine cannot be fully encapsulated.

Lastly, energy consumption at low speeds is higher in parallel hybrid systems than in electrical propulsion systems. This is due, in particular, to inefficient utilization of the internal combustion machine at low operating regimes, especially with fixed-pitch propellers.

**If** we choose a system whereby the thrust to move the craft is provided solely and exclusively using electric motors connected directly to the screw or other kind of propeller and the electricity for this is generated by internal combustion machines of any kind (Otto/Diesel cycle engine, gas turbine, steam turbine or other), then we may speak of a *serial hybrid* propulsion system.

Normally, in a serial hybrid propulsion system, the power is generated by an electrical machine (alternator) that is mounted directly to the Diesel engine.

The electrical machine produces energy which is then converted, through one or more inverters and fed to a busbar common to all the other production/absorption/accumulation components.

The power required by any part is "drawn" from the common busbar, generally direct current, and, if necessary, reconverted to alternating current before use.

With this type of propulsion, before power is effectively used, it requires multiple conversions, at the expense of efficiency, hence of consumption. Taking, for example, a configuration involving a power generator (Gen), a first AC/DC conversion (Inv.AC→DC), a second DC/AC conversion (Inv.DC→AC) and the motor (Mot) and an efficiency of 0,97 for each electrical machine and for the converters, the overall efficiency of a serial hybrid system is around:

$$0.97(Gen.) \cdot 0.97(Inv. AC \rightarrow DC) \cdot 0.97(Inv. DC \rightarrow AC) \cdot 0.97(Mot.) = 88.5\%$$

The higher production costs of the system compared to a traditional system or a parallel hybrid system constitute another disadvantage.

Consumption is generally higher than in a traditional propulsion system on account of the considerable number of times the power is converted from where it is generated to where it is used.

A serial hybrid system requires more space not only for the electrical control panels that accommodate all the components needed to convert/adapt the power for the different uses but also for the batteries.

In the marine engineering sector, therefore, there is therefore a need for a propulsion system that is relatively economical and silent and that allows greater freedom to define the layout of the craft.

In this context, our intention is to propose a marine propulsion system that is capable of overcoming at least some of the drawbacks of the prior art and of meeting the above mentioned need.

An aim of this invention is to propose a marine propulsion system that is relatively economical and silent and that allows greater freedom to define the layout of the craft.

An aim of this invention is to propose a craft propulsion system (for pleasure and commercial craft) adapted to increase the overall energy efficiency of the system compared to customary hybrid propulsion systems, with tangible advantages in terms of the operating costs normally borne by shipping companies.

This aim is achieved by a marine propulsion system comprising the technical features described in one or more of the accompanying claims. The dependent claims correspond to possible different embodiments of the invention.

Further features and advantages of the marine propulsion system are more apparent in the exemplary, hence non-limiting description which follows of a preferred embodiment of a marine propulsion system.

The description is set out below with reference to the accompanying drawings which are provided solely for purposes of illustration without restricting the scope of the invention and in which:

- Figure 1 shows a block diagram representing a marine propulsion system according to this disclosure;
- Figure 2 shows a block diagram representing two marine propulsion systems according to this disclosure, having a bus line in common.

A marine propulsion system according to this disclosure is denoted in its entirety by the numeral 1; the components of the system described below represent the functions they are required to fulfil and can be replaced with other components or combinations of other components capable of fulfilling the same function.

Generally speaking, a craft can comprise one or more propulsion systems of the kind described below, depending on the basic craft design.

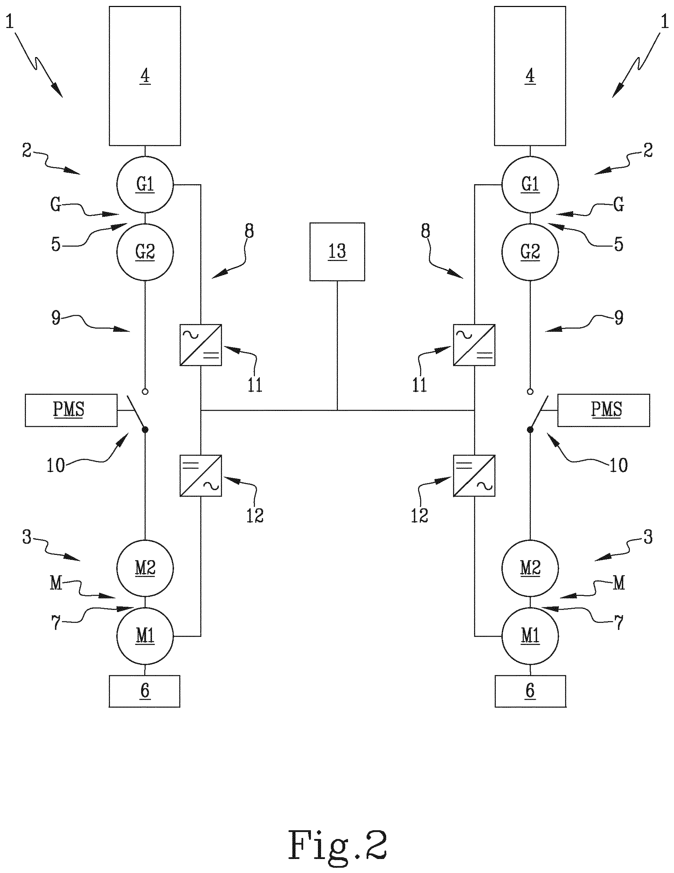

Figure 2, for example, shows a diagram of two propulsion systems with a bus line in common and with other parts removed for greater clarity.

Preferably, the craft comprises a system for the management and control of the installations on board, in particular, a system for managing the electrical power used to drive the on-board installation and which may hereinafter be denoted by the acronym PMS, which stands for *Power Management System.* An example of such a management system is described in application BO2015A000101.

The propulsion system 1 comprises a power generating unit 2 for generating electrical power and a propulsion unit 3 for converting the electrical power into propulsive thrust.

The power generating unit 2 comprises an electric generator G and a motion generator 4 for driving the electric generator G.

The motion generator 4 may comprise, for example, an internal combustion or gas turbine engine, based on an Otto, Diesel, Atkinson, Wankel, Stirling, Rankine, Bryton-Joule cycle or any other solution of known type.

The electric generator G essentially comprises a stator and a rotor 5, driven by the motion generator 4, for energizing the stator.

The stator comprises at least a first armature winding or armature G1 and a second armature winding or armature G2.

By armature winding or armature is meant, essentially, a stator winding which may comprise two or more phases, preferably three, in which electromagnetic induction phenomena caused by the rotor 5 (inductor) take place.

In the example illustrated, the electric generator G is what is known as a generator with double winding G1, G2.

The electric generator G comprises the two windings G1, G2 which are located inside a single casing and which are distinct from each other and, in practice, together with the rotor 5, define two distinct electric generators G1, G2 having the rotor 5 in common.

The electric generator G preferably produces a maximum power from 50 kW to 1 MW and/or a maximum torque from 100 Nm to 10,000 Nm considering only the winding G1.

The electric generator G preferably produces a maximum power from 50 kW to 1 MW and/or a maximum torque from 100 Nm to 10,000 Nm considering only the winding G2.

Hereinafter, the windings G1 and G2 are also referred to as two electric generators G1, G2.

In alternative embodiments, the electric generator G comprises more windings, based on the application.

In an embodiment, the electric generator G is an asynchronous electrical machine.

In an embodiment, the electric generator G is a synchronous electrical machine, for example, a permanent magnet machine.

The propulsion unit 3 comprises a propelling system 6 and at least one electric motor M for driving the propelling system 6.

The propelling system 6 comprises, for example, surface propellers and/or an azimuth foot and/or a stern foot and/or a jet and/or an IPS and/or other propelling system.

The electric motor M comprises a stator that is provided with at least a first winding M1 and a second winding M2; the first and the second winding M1, M2 are independent and can be powered independently of each other.

The electric motor M comprises a rotor 7, common to the two windings M1, M2 for driving the propelling system 5.

By winding M1, M2 is meant a stator winding which may also comprise two or more conductors and/or phases, preferably three, which is powered to generate the electromagnetic field which sets the rotor 7 in rotation.

In the example illustrated, the electric motor M is what is known as a motor with double winding M1, M2.

In alternative embodiments, the electric motor M comprises more windings, based on the application.

The electric motor M comprises the two windings M1, M2 which are located inside a single casing and which are distinct and independent and, together with the rotor 7, define two motors M1, M2 having the rotor 7 in common.

Hereinafter, the windings M1 and M2 are also expressly referred to as two electric motors M1, M2.

The electric motor M preferably produces a maximum power from 50 kW to 1 MW and/or a maximum torque from 100 Nm to 10,000 Nm considering only the winding M1.

The electric motor M preferably produces a maximum power from 50 kW to 1 MW and/or a maximum torque from 100 Nm to 10,000 Nm considering only the winding M2.

Hereinafter, for convenience, reference is made to two electric motors M1, M2.

In an embodiment, the electric motor M is an asynchronous electrical machine.

In an embodiment, the electric motor M is a synchronous electrical machine, for example, a permanent magnet machine.

The propulsion system 1 comprises a bus line 8 and a propelling line 9, both powered by the power generating unit 2.

In the example illustrated, the propulsion system 1 comprises a single power generating unit 2 for powering the propelling line 9 and the bus line 8.

In an embodiment, if necessary, the propulsion system 1 comprises a second power generating unit for powering the bus line 8.

The bus line 8 and the propelling line 9 may power the electric motor M. The bus line 8 and the propelling line 9 may power the motor M1 and the motor M2, respectively, independently of each other.

More specifically, as illustrated, the bus line 8 is powered by the electric generator G1 and the propelling line is powered by the electric generator G2.

The bus line 8 powers the electric motor M1 and the propelling line 9 powers the electric motor M2.

In practice, the propelling line 9 is the part of the propulsion system 1 that connects the energy generating system directly to the propulsion unit 3.

The propulsion system 1 comprises a switch 10 mounted along the propelling line 9 to open or close the line itself.

The switch 10 is, for example, driven by the PMS for the management and control of the installations on board the craft.

The switch 10 exemplifies a system for opening and closing the propelling line 9 so as to feed the energy generated directly to the propulsion unit 3, that is to say, basically, without converting the energy produced by the generator G2.

For example, the switch 10 comprises contactors or power interrupters.

With reference to the example illustrated, the electrical energy produced by the power generating unit 2 is considered as being generated in alternating current; similar considerations can be made for energy generated in direct current, excepting cases where converters of a different kind are used.

The propulsion system 1 comprises an AC/DC converter 11 for converting the electrical energy from the electric generator G, specifically from the generator G1, for powering the bus line 7 in direct current.

The propulsion system 1 comprises a DC/AC converter 12 for powering the motor M and located between the bus line 8 and the motor.

More specifically, the DC/AC converter 12 is operatively interposed between the bus line 8 and the motor M1 so that the motor M1 can be powered by the bus line 8 itself.

In an embodiment illustrated by way of example, the propulsion system 1 comprises an accumulation system 13 in communication with the bus line 8, preferably downstream of the AC/DC converter 11.

The accumulation system 13 is provided to accumulate the electrical energy produced by the electric generator G, specifically by the generator G1.

The accumulation system 13 may comprise, for example, capacitors and/or super capacitors and/or batteries.

The batteries may be, for example, lithium ion, lithium polymer, sodium-nickel, nickel-metal hydride (lead), AGM (gel), mechanical, graphene, solid-state or other type of battery.

As illustrated schematically, the propulsion system 1 comprises a DC/DC converter 14 between the bus line 8 and the accumulation system 13 to allow energy exchange between the bus line 8 and the accumulation system 13.

In the example illustrated, the propulsion unit 3 comprises at least one electrical propulsor 15, for example, a manoeuvring propeller or a tunnel propeller, powered by the bus line 8.

The electrical propulsor 15 comprises an electric motor M3, powered by the bus line 8 and a propulsion device 16, for example, a propeller, driven by the motor M3.

The propulsion system 1 comprises a DC/AC converter 17 for powering the motor M3 and located between the bus line 8 and the motor.

The example illustrated shows an AC/DC converter 18 for connecting the bus line 7 to an external power supply, for example, in a port.

The example illustrated shows a DC/AC converter 19 for powering from the bus line 8 the electricity users U on board the craft, for example, the hotel; preferably, an energy transformer system T is provided downstream of the DC/AC converter 19.

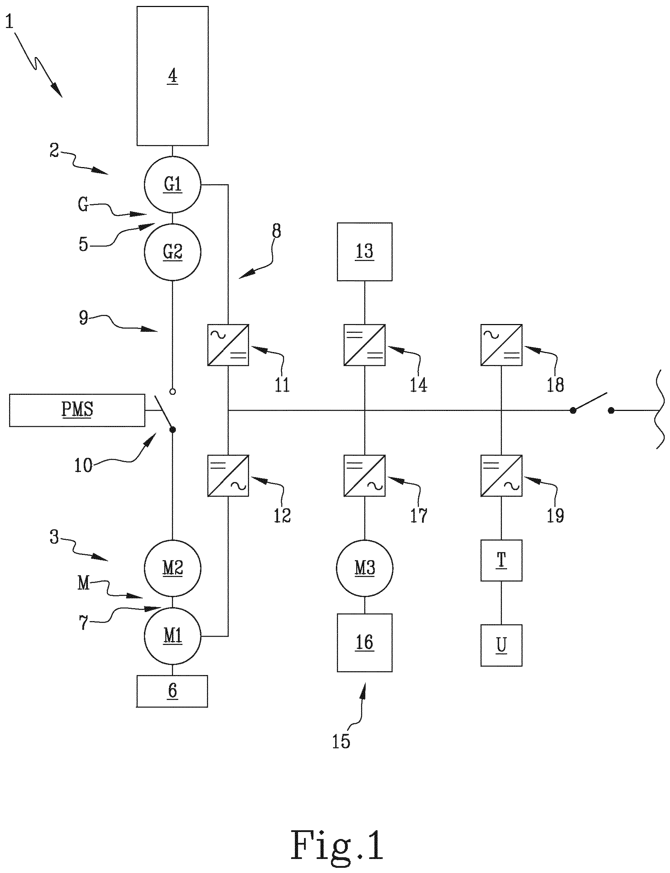

As mentioned above, a craft may, generally speaking, comprise one or more propulsion systems of the kind described herein, depending on the basic craft design. For example, the craft may comprise two propulsion systems 1, preferably identical, having the bus line 8 in common, as illustrated in Figure 1.

Shown below are two practical examples of the operation of a propulsion system 1 in a semi-displacement yacht with the following features:

| Length: | 50 metres |
|---|---|
| Beam | 8.45 metres |
| Draft (full displacement) | 2.30 metres |
| Gross Tonnage | <500GT |

| 2 electric motors M-2x500kW | |
|---|---|
| Windings 1 and 2 = Motors M1 and M2 | |
| Motor M1 | |
| Max torque | 1,700 Nm |
| Max power | 250 kW |
| Max rpm | 2,000 rpm |
| Motor M2 | |
| Max torque | 700 Nm |
| Max power | 250 kW |
| Max rpm | 2,000 rpm |

| 2 electric generators G 2x500kW | |
|---|---|
| Windings 1 and 2 = Generators G1 and G2 | |
| Generator G1 | |
| Max torque | 1,700 Nm |
| Max power | 250 kW |

(continued)

| 2 electric generators G 2x500kW | |
|---|---|
| Windings 1 and 2 = Generators G1 and G2 | |
| **Generator G1** | |
| Max rpm | 2,000 rpm |
| **Generator G2** | |
| Max torque | 700 Nm |
| Max power | 250 kW |
| Max rpm | 2,000 rpm |

| Performance | | Power requirement |
|---|---|---|
| *Economical speed:* | *9.0 knots* | 220 kW |
| *Cruising speed:* | *11.7 knots* | 742 kW |
| *Maximum speed:* | *13.0 knots* | 990 kW |

The diagram below shows the equal-consumption curves of a known Diesel engine model, chosen as motion generator 4, and the curves along which the engine must deliver power.

Based on the above diagram, two operating points, labelled P1 and P2, have been selected.
P1 is positioned at 1,400 rpm, with a resistant torque of 1,700 Nm, thus capable of producing a power of 250 kW; the second point P2, on the other hand, is located at 2,000 rpm (rotation speed coinciding with the maximum input speed of the propulsion system), with a resistant torque of 2,400 Nm and a total produced power of 500 kW.

The powers indicated above are divided by propelling line, hence halved (2x500 kW).

**EXAMPLE 1** - **Craft travelling at 9 knots** (4,63 m/s)

There are, for example, two strategies for travelling at 9 knots:

### 1) Using only one power generating unit 2

The motion generator 4 of one of the propulsion systems 1 is brought to the operating position P1, runs at constant rpm and delivers 250 kW constant, with a specific consumption of 205 g/kWh.
All the energy generated by the generator G1 driven by the generator 4 is transferred to the bus line 8 and used for propulsion, powering the motors M1 of both the propulsion systems 1.
In effect, a single power generating unit 2 can exhaustively power both of the motors M1, since the power requirement is 220 kW against available 250 kW.

### 2) Using two power generating units 2

The motion generators 4 of both propulsion systems 1 are brought to the operating position P1, run at constant rpm and deliver 250 kW constant, with a specific consumption of 205 g/kWh.
For each propulsion system 1, the generators G1 deliver 250 kW, of which 110 kW are used to power the respective motor M1, while 140 kW from each power generating unit 2 go to the accumulation system 13.
Advantageously, after producing energy for one hour, there will be enough energy for the craft to travel at 9 knots completely noiselessly for one whole hour, because a quantity of energy usable for this length of time will have been accumulated (140kW+140kW redundant).
With strategy number 1, the generator G1 delivers 250 kW at 1,400 rpm, whilst the generator G2, which is integrated in the same electrical machine as G1, and thus also runs at 1,400 rpm, does not place the engine M2 under load because it is disconnected from it (until reaching 1400 rpm, point P1). Similarly, with strategy number 2, the generators G1 deliver 250 kW at 1,400 rpm, whilst the generators G2, which are each integrated in the same electrical machine as the respective G1, and thus also run at 1,400 rpm, do not place the respective engine M2 under load because they are disconnected from them (until reaching 1400 rpm, point P1).

**EXAMPLE 2** - **Craft travelling at maximum speed**

When the speed of the craft is increased to maximum speed, the above mentioned point P2 is reached.
As soon as the 1,400 rpm threshold is exceeded, the contactor 10 mounted between the alternator G2 and the motor M2 of each propulsion system 1 is closed by the power management system.
The motion generator 4, for example, a Diesel generator, behaves in a dual manner, that is to say:

- the alternators G1 reach as much as 2000 rpm while generating the same output power of 250 kW, which is delivered to the respective M1;
- the alternators G2, which come into operation at rpm>1400, transfer power directly to the respective propulsion motor M2 following the path up to 2000 rpm from P1 to P2.

The higher the rpm reached by the Diesel generators 4, the higher the power transmitted directly to the corresponding propulsion motor M2. That means that from 1,400 rpm to 2,000 rpm, the Diesel generators 4 are as if mounted directly to the corresponding motor M2, hence as if the craft were driven by a traditional propulsion system.
The above may be quickly identified in the graph below, which relates to a single propulsion system 1:

The x-axis shows the rpm of the generators G1 and G2, while the y-axis shows the power delivered by the generators G1 and G2 in kW.

The dark dashed line represents the power generated by the alternator G1, the medium dark dashed line represents the power generated by the alternator G2, while the pale dashed line represents the total power which is generated by the power generating unit 2 and which is sent entirely to the two propulsion motors M1, M2.

The total resistant torque at the alternator and the total maximum power delivered are given by the sum of the single values at the alternators:

$$1.700\ Nm(G1) + 700\ Nm(G2) = 2.400\ Nm(G1 + G2)$$

$$250\ kW(G1) + 250\ kW(G2) = 500\ kW(G1 + G2)$$

For the first 250 kW, the real power to the shaft of the propelling system 6, considering the overall efficiency (two electrical machines and two conversions) is:

$$G1: 250 \cdot 88,5\% = 221 kW$$

For the second 250 kW, the real power to the shaft of the propelling system 6, considering the overall efficiency (two electrical machines) is:

$$G2: 250 \cdot 94\% = 235 kW$$

For each propulsion system 1, the available power is given by the sum of P1 and P2, that is to say:

$$Ptot=221\ kW+235\ kW=456\ kW$$

If a serial hybrid system as described in the introduction had been used, the result would have been:

$$Ptot=2\cdot P1=2\cdot 221\ kW=442\ kW$$

corresponding to a 3% lower overall efficiency of the propulsion system 1. The solution described brings important advantages.

The propulsion system comprises an assembly of interconnected main components capable of producing energy using the motion generated by heat machines or deriving from another source. This energy is distributed between a bus line and a direct propelling line. The former, that is, the bus line, is used to power the auxiliary services, together with the batteries, if provided, and may also be used simultaneously to power the propelling system, whilst the latter, that is, the direct propelling line, is connected directly to the electrical propulsion motors.

The motion generating system is connected to a synchronous or asynchronous energy generator with multiple windings having the rotor in common.

The bus line is responsible for converting the electrical energy derived from the source and intended for all the different energy user systems (auxiliaries, batteries, if provided, and propulsion). The energy is converted through a series of converters, transformers and inverters capable of modifying the state of the current from alternating to direct and vice versa enabling it to be used directly by the systems concerned.

The direct propelling line places the energy generating system in direct connection with the propelling system. Along the direct propelling line there may be power interrupters of any kind, for example, contactors.

The electrical propelling motors are responsible for converting the energy from the bus line, from the direct propelling line and from the batteries, if provided, into mechanical propelling motion. The electric motor is synchronous or asynchronous and may be mounted directly to the selected propulsion system.

The propulsion system allows optimizing the overall efficiency, reducing the production costs for the shipbuilders, reducing craft power consumption and reducing the spaces occupied by the components connected with craft propulsion.

Craft layout is more flexible because there is no need for a direct mechanical connection between an internal combustion engine and the propelling system.

The power generating units can be installed on vibration damping supports with relative low Shore, thereby reducing the vibrations, since there are no mechanical tolerances to observe.

The power generating unit may be encapsulated in sound absorbing/sound insulating panels, thus reducing airborne noise transmission.

It is possible to use a single energy source both for propulsion and for the user systems that require it, for example, those connected with the hotel.

By careful management of the heat machine in conjunction with battery use, it is possible to produce energy for propulsion at energy saving speeds with consumption rates which are markedly lower than those of a traditional propulsion system.

The propulsion machine can be mounted in reduced spaces because, for the same amount of power delivered, an electric motor is much smaller and lighter than an internal combustion engine and does not need any accessory component to ensure it operates correctly (for example, exhausts).

The input of the bus line can be power at any voltage and frequency.

If provided with an energy accumulation system, the craft can cruise on fully electric drive with zero emissions.

**Claims**

1.    A marine propulsion system comprising a power generating unit (2), a bus line (8) and a propelling line (9) powered by the power generating unit (2) wherein the power generating unit (2) comprises at least one motion generator (4), for example, an Otto or Diesel cycle internal combustion engine or gas turbine, and an electric generator (G) driven by the motion generator (4), the electric generator comprising

     a stator comprising at least a first armature (G1) for powering the bus line (8),
     at least a second armature (G2) for powering the propelling line (9),
     a first rotor (5), driven by the motion generator (4) and common to the first and the second armature (G1, G2), the propulsion system comprising a propulsion unit (3) comprising a propelling system (6) and at least one electric motor (M) for driving the propelling system (6), the electric motor (M) comprising a stator provided with at least a first winding (M1) that is powerable by the bus line (8) and at least a second winding (M2) that is powerable by the propelling line (9), the electric motor (M) comprising a second rotor (7) that is drivable by the first and second windings (M1, M2), the propelling line (9) being distinct from the bus line (8), the propulsion system comprising a switch (10) mounted along the propelling line (9) to open or close the propelling line (9).

2.    The propulsion system according to claim 1, comprising a first converter, for example, AC/DC (11) between the first armature (G1) and the bus line (8).

3.    The propulsion system according to any one of the preceding claims, comprising a second converter, for example, DC/AC (12) between the bus line (8) and the first winding (M1).

4.    The propulsion system according to any one of the preceding claims, comprising an accumulation system (13) in communication with the bus line (8).

5.    The propulsion system according to claim 4, comprising a third converter, for example, DC/DC (14) between the bus line (8) and the accumulation system (13).

6. The propulsion system according to any one of the preceding claims, wherein the propulsion unit (3) comprises at least one electrical propulsor (15) powered by the bus line (8).

7. The propulsion system according to claim 6, comprising a fourth converter, for example, DC/AC (17) between the bus line (8) and the electrical propulsor (15).

8. The propulsion system according to any one of the preceding claims, comprising a single power generating unit (4) for powering the propelling line (9) and the bus line (8).

**Patentansprüche**

1. Seefahrtantriebssystem, umfassend eine Stromerzeugungseinheit (2), eine Busleitung (8) und eine von der Stromerzeugungseinheit (2) mit Strom versorgte Antriebsleitung (9), wobei die Stromerzeugungseinheit (2) mindestens einen Bewegungsgenerator (4), beispielsweise einen Otto- oder Diesel-Verbrennungsmotor oder eine Gasturbine, und einen von dem Bewegungsgenerator (4) angesteuerten elektrischen Generator (G) umfasst, wobei der elektrische Generator einen Stator umfasst, der mindestens einen ersten Anker (G1) zum Versorgen der Busleitung (8) mit Strom,

   mindestens einen zweiten Anker (G2) zum Versorgen der Antriebsleitung (9) mit Strom umfasst,
   einen ersten Rotor (5), der von dem Bewegungsgenerator (4) angesteuert wird und dem ersten und dem zweiten Anker (G1, G2) gemeinsam ist,
   wobei das Antriebssystem eine Antriebseinheit (3) umfasst, die ein Antriebssystem (6) und mindestens einen Elektromotor (M) zum Ansteuern des Antriebssystems (6) umfasst, wobei der Elektromotor (M) einen Stator umfasst, der mit mindestens einer ersten Wicklung (M1), die durch die Busleitung (8) mit Strom versorgbar ist, und mindestens einer zweiten Wicklung (M2), die durch die Antriebsleitung (9) mit Strom versorgbar ist, versehen ist, wobei der Elektromotor (M) einen zweiten Rotor (7) umfasst, der durch die erste und zweite Wicklung (M1, M2) ansteuerbar ist, wobei sich die Antriebsleitung (9) von der Busleitung (8) unterscheidet, wobei das Antriebssystem einen Schalter (10) umfasst, der entlang der Antriebsleitung (9) montiert ist, um die Antriebsleitung (9) zu öffnen oder zu schließen.

2. Antriebssystem nach Anspruch 1, umfassend einen ersten Umrichter, beispielsweise AC/DC (11), zwischen dem ersten Anker (G1) und der Busleitung (8).

3. Antriebssystem nach einem der vorhergehenden Ansprüche, umfassend einen zweiten Umrichter, beispielsweise DC/AC (12), zwischen der Busleitung (8) und der ersten Wicklung (M1).

4. Antriebssystem nach einem der vorhergehenden Ansprüche, umfassend ein Akkumulationssystem (13) in Kommunikation mit der Busleitung (8).

5. Antriebssystem nach Anspruch 4, umfassend einen dritten Umrichter, beispielsweise DC/DC (14), zwischen der Busleitung (8) und dem Akkumulationssystem (13).

6. Antriebssystem nach einem der vorhergehenden Ansprüche, wobei die Antriebseinheit (3) mindestens einen elektrischen Antrieb (15) umfasst, der von der Busleitung (8) mit Strom versorgt wird.

7. Antriebssystem nach Anspruch 6, umfassend einen vierten Umrichter, beispielsweise DC/AC (17), zwischen der Busleitung (8) und dem elektrischen Antrieb (15).

8. Antriebssystem nach einem der vorhergehenden Ansprüche, umfassend eine einzelne Stromerzeugungseinheit (4) zum Versorgen der Antriebsleitung (9) und der Busleitung (8) mit Strom.

**Revendications**

1. Système de propulsion marine, comprenant une unité de production d'énergie (2), une ligne de bus (8) et une ligne de propulsion (9) alimentée par l'unité de production d'énergie (2), dans lequel l'unité de production d'énergie (2) comprend au moins un générateur de mouvement (4), par exemple un moteur à combustion interne à cycle Otto ou Diesel ou une turbine à gaz, et un générateur électrique (G) entraîné par le générateur de mouvement (4), le générateur électrique comprenant un stator comprenant au moins une première armature (G1) pour alimenter la ligne de bus (8),

au moins une seconde armature (G2) pour alimenter la ligne de propulsion (9),
un premier rotor (5), entraîné par le générateur de mouvement (4) et commun aux première et secondes armatures (G1, G2),
le système de propulsion comprenant une unité de propulsion (3) comprenant un système de propulsion (6) et au moins un moteur électrique (M) pour entraîner le système de propulsion (6), le moteur électrique (M) comprenant un stator pourvu d'au moins un premier enroulement (M1) pouvant être alimenté par la ligne de bus (8) et d'au moins un second enroulement (M2) pouvant être alimenté par la ligne de propulsion (9), le moteur électrique (M) comprenant un second rotor (7) pouvant être entraîné par les premier et second enroulements (M1, M2), la ligne de propulsion (9) étant distincte de la ligne de bus (8), le système de propulsion comprenant un commutateur (10) monté le long de la ligne de propulsion (9) pour ouvrir ou fermer la ligne de propulsion (9).

2. Système de propulsion selon la revendication 1, comprenant un premier convertisseur, par exemple CA/CC (11), entre la première armature (G1) et la ligne de bus (8).

3. Système de propulsion selon l'une quelconque des revendications précédentes, comprenant un deuxième convertisseur, par exemple CC/CA (12), entre la ligne de bus (8) et le premier enroulement (M1).

4. Système de propulsion selon l'une quelconque des revendications précédentes, comprenant un système d'accumulation (13) en communication avec la ligne de bus (8).

5. Système de propulsion selon la revendication 4, comprenant un troisième convertisseur, par exemple CC/CC (14), entre la ligne de bus (8) et le système d'accumulation (13).

6. Système de propulsion selon l'une quelconque des revendications précédentes, dans lequel l'unité de propulsion (3) comprend au moins un propulseur électrique (15) alimenté par la ligne de bus (8).

7. Système de propulsion selon la revendication 6, comprenant un quatrième convertisseur, par exemple CC/CA (17), entre la ligne de bus (8) et le propulseur électrique (15).

8. Système de propulsion selon l'une quelconque des revendications précédentes, comprenant une seule unité de production d'énergie (4) pour alimenter la ligne de propulsion (9) et la ligne de bus (8).

Fig.1

Fig.2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012119873 A1
- EP 3736168 A1
- US 2016362187 A1
- WO BO2015000101 A